# DEMANDE DE BREVET EUROPEEN

(11) **EP 0 732 376 A2**
(43) Date de publication de la demande: **18.09.1996**
(21) Numéro de dépôt: 96400531.8
(22) Date de dépôt: 14.03.1996
(51) Int. Cl.: C08L 95/00

(54) **Emulsion anionique d'un liant bitumineux, dur dans un état final, et procédé de fabrication d'une telle émulsion**

(30) Priorité: 15.03.1995 FR 9503018
(71) Demandeur: COLAS S.A., F-92653 Boulogne-Billancourt Cédex (FR)
(72) Inventeur: Ballie, Michel, 68420 Gueberschwihr (FR); Durand, Graziella, 92270 Bois Colombes (FR); Richard, Fabrice, 92130 Issy Les Moulineaux (FR)
(74) Mandataire: Michelet, Alain

(57) **Abrégé**

Emulsion anionique d'un liant bitumineux, dur dans un état final, comprenant au moins un premier émulsifiant en phase auqueuse et du bitume.

Selon l'invention, cette émulsion comprend un deuxième émulsifiant et l'un des premier et deuxième émulsifiants est anionique alors que l'autre est non ionique.

## Description

L'invention concerne une émulsion anionique d'un liant bitumineux, dur dans un état final, ainsi qu'un procédé de fabrication d'une telle émulsion.

L'émulsification des liants bitumineux fait appel à des agents émulsifiants qui favorisent la dispersion des particules de liant dans la phase aqueuse et leur stabilisation par formation d'une couche protectrice électriquement chargée à l'interface qui évite ainsi leur agglomération.

Dans le cas d'émulsions anioniques classiques, l'agent émulsifiant est du type anionique et consiste le plus souvent en un sel alcalin d'acide gras.

Les émulsions bitumineuses sont utilisées principalement dans les applications de construction et d'entretien routier (techniques d'enduisage et d'enrobage). Elles se présentent en général sous forme cationique, ce qui leur confère, en particulier, une meilleure adhésivité vis à vis des granulats que les émulsions anioniques.

Cependant, dans certaines applications industrielles, autres que les applications routières pour lesquelles l'émulsion doit servir de liant entre fibres d'origine naturelle, l'émulsion est nécessairement de type anionique, puisqu'il s'agit de respecter un pH basique (pH > 10).

Par ailleurs, certains procédés industriels font appel à une émulsion de bitume pouvant lier entre eux différents éléments. En particulier, il peut s'agir de fibres cellulosiques entrant dans la composition des panneaux ou de cartons. L'utilisation de l'émulsion impose que celle-ci soit stable à une température voisine de 70°C. Ainsi la finesse des particules de bitume doit être quasi constante tout au long du procédé jusqu'à la rupture au contact des fils cellulosiques. Dans le cas où l'émulsion n'est pas stable à la température d'usage, celle-ci, devenue "grossière", rompt en formant au séchage des taches noires d'où l'apparition de taches au lieu d'une répartition homogène et fine dans la masse, donc un effet peu esthétique, et une perte d'efficacité du liage entre les fibres.

Une autre contrainte pour l'émulsion est que le liant résiduel doit avoir une dureté importante afin d'éviter les effets néfastes qui résulteraient du caractère collant (tack) du mélange à l'application et lors du nettoyage de l'installation industrielle.

Le but de l'invention est de proposer une émulsion anionique d'un liant bitumineux qui puisse satisfaire les contraintes et pallier les inconvénients énoncés ci-avant.

L'invention a pour objet une émulsion anionique d'un liant bitumineux, dur dans un état final, comprenant au moins un premier émulsifiant en phase aqueuse et du bitume.

Conformément à l'invention, cette émulsion comprend un deuxième émulsifiant. Un des premier et deuxième émulsifiants est anionique alors que l'autre est non ionique.

L'émulsion de l'invention peut également avoir l'une ou l'autre des caractéristiques suivantes, ou une combinaison de celles-ci:
- l'émulsifiant anionique est une résine acide de type phénolique;
- l'émulsifiant anionique est une résine acide issue de la gomme de pin;
- l'émulsifiant anionique est un acide résinique de Tall-oil;
- l'émulsifiant non ionique est un émulsifiant à point de trouble supérieur à 100°C;
- l'émulsifiant non ionique est un émulsifiant exempt de chaîne éthoxylée;
- l'émulsifiant non ionique est un émulsifiant n'ayant pas de point de trouble;
- l'émulsifiant non ionique est un sucrolipide.

L'invention a également pour objet un système émulsifiant pour l'obtention d'une émulsion anionique d'un liant bitumineux, dur dans un état final. Ce système comprend un émulsifiant anionique et un émulsifiant non ionique.

Le liant bitumineux utilisé dans l'émulsion de l'invention peut être choisi parmi:
- un bitume pur (distillation directe),
- un bitume modifié par un polymère (SBS, SBR, SIS, EVA...),
- un bitume oxydé,
pourvu que sa pénétrabilité soit inférieure à 50 (1/10 mm) au sens de la norme NFT 66-004.

Le système émulsifiant choisi ne doit donc pas modifier ni contrarier la dureté du liant bitumineux choisi.

Le système émulsifiant pour la fabrication de l'émulsion anionique de l'invention consiste en une association nécessaire de deux émulsifiants de nature différente:
- le premier est anionique et est donc responsable des répulsions électrostatiques entre les particules de bitumes et qui tendent à stabiliser l'émulsion,
- le deuxième est non ionique et est responsable des répulsions stériques venant s'ajouter aux répulsions électrostatiques. Ces répulsions dites "stériques" correspondent à la formation d'une carapace renforcée autour des particules de bitume qui les protège vis à vis de l'agglomération des particules de bitume.

Le système émulsifiant choisi permet de réduire le phénomène de rupture du film liquide entre deux particules voisines et donc de réduire l'agglomération des particules de bitume.

Le choix de l'émulsifiant anionique peut se faire parmi:
- les résines acides de type phénolique,
- les résines acides issues de la gemme de pin (colophane de gemme),
- les acides résiniques de Tall-oil (colophane de bois, sous produit de la fabrication de la cellulose à partir des bois de pin par le procédé dit au "sulfate").

Le choix de l'émulsifiant non ionique est plus délicat. En effet, la plupart d'entre eux présentent une température de point de trouble, température pour laquelle il y a rupture des liaisons hydrogène (plus communément appelées liaisons-H) entre l'eau (phase dispersante) et l'émulsifiant non ionique. Au-delà de la température de point de trouble (mesurée au sens de la norme NFT 73-403) l'émulsifiant perd son rôle de stabilisateur d'émulsion.

Les émulsifiants non ioniques à point de trouble correspondent à la plupart des émulsifiants commerciaux; leur nature chimique est telle qu'ils comportent une chaîne éthoxylée responsable de ce phénomène.

L'émulsifiant non ionique est donc choisi parmi:
- les émulsifiants éthoxylés à point de trouble très élevé (> 100°C),
- ou mieux, les émulsifiants à absence totale de point de trouble, comme par exemple les émulsifiants exempts de chaînes éthoxylées.

Parmi ces derniers citons par exemple la famille des sucrolipides résultant de la condensation directe entre un sucre (ex: glucose) et un alcool.

Le système émulsifiant décrit jusqu'ici, qui est une combinaison d'un émulsifiant anionique avec un émulsifiant non ionique, confère à l'émulsion de bitume une excellente stabilité dans le temps et à la température.

L'invention a par ailleurs pour objet un procédé de fabrication d'une émulsion anionique d'un liant bitumineux, dur en un état final, comprenant les étapes de:
- préparation d'une phase aqueuse d'un émulsifiant anionique par dispersion dans de l'eau industrielle;
- addition à la phase aqueuse d'une base permettant d'obtenir une émulsion basique d'une valeur pH > 10;
- addition d'un émulsifiant non ionique;
- addition d'un bitume, et
- mélange de l'ensemble émulsifiant/bitume dans un homogénéiseur.

Ce procédé de fabrication d'une émulsion selon la présente invention comporte les étapes traditionnelles de préparation de la phase aqueuse et de mélange de cette phase avec la phase bitumineuse au sein d'un moulin colloïdal.

La teneur en liant au sein de l'émulsion peut être comprise entre 50 et 70%.

D'autres caractéristiques et avantages de l'invention ressortiront à la lecture d'exemples de réalisation.

### EXEMPLE 1

Une émulsion est préparée à partir d'un bitume de grade 35/50 et contient 60% de bitume.

La phase aqueuse est réalisée par dispersion dans de l'eau industrielle d'un émulsifiant qui est un acide de résine phénolique. Sa concentration est de 10 g/l d'émulsion. La saponification est réalisée par ajout de NaOH 36°B de façon à utiliser le pH entre 11 et 12.

Cette phase aqueuse conduira à une émulsion A. A la phase aqueuse réalisée comme précédemment, on incorpore un émulsifiant anionique qui est un sel alcalin d'acide gras à raison de 5 g/l d'émulsion.

Cette nouvelle phase aqueuse conduira à une émulsion B.

A la phase aqueuse de l'émulsion A, on ajoute une deuxième résine anionique acide à raison de 10 g/l.

Cette phase aqueuse conduira à une émulsion C. A la phase aqueuse de l'émulsion A, on ajoute un émulsifiant non ionique de type sucrolipide exempt de point de trouble à raison de 10 g/l d'émulsion.

Cette phase aqueuse conduira à une émulsion D qui est l'émulsion de l'invention.

Lors de la fabrication des émulsions A à D, la phase aqueuse est mélangée au bitume dans un homogénéiseur du type moulin colloïdal dans lequel on introduit 400 parties de phase aqueuse à 30°C et 600 parties de bitume à 160°C.

Les propriétés de ces quatre émulsions sont comparées entre elles dans le Tableau 1.

Il ressort que seul le système émulsifiant mixte utilisé pour l'émulsion D permet non seulement de fabriquer une émulsion homogène (qui ne possède pas de peau en surface mais qui satisfasse aussi au test de stabilité à la température.

### EXEMPLE 2

Selon un mode opératoire similaire à celui de l'exemple n° 1, quatre nouvelles émulsions ont été fabriquées avec un système émulsifiant anionique/non ionique.

L'émulsion anionique correspond à une résine acide (à raison de 10 g/l d'émulsion).

L'émulsifiant non ionique (employé à raison de 10 g/l) est de deux types:
- un émulsifiant dont le point de trouble est compris entre 70°C et 80°C, de nature nonyl phénol éthoxylé; son utilisation en association avec l'émulsion anionique conduit aux émulsions E et G.
- un émulsifiant exempt de point de trouble, de nature sucrolipide, qui en association avec l'émulsifiant anionique conduit aux émulsions F et H.

Les bitumes sont de deux types:
- un bitume de grade 35/50 de pénétrabilité mesurée: 41 (1/10 mm),
- un bitume spécial plus dur de pénétrabilité mesurée: 5 (1/10 mm).

Parmi les quatre émulsions E, F, G, H ainsi fabriquées, les émulsions F et H représentent les émulsions de l'invention: l'émulsion F à base de bitume de pénétrabilité 41, l'émulsion H à base de bitume de pénétrabilité 5.

Les résultats des tests d'homogénéité de ces émulsions (refus tamis 160 µm) et de stabilité à la température sont indiqués dans le Tableau 2.

Il ressort du Tableau 2 que le système émulsifiant comprenant l'émulsifiant non ionique exempt de point de trouble, permet l'obtention d'une meilleure stabilité à la température de l'émulsion et cela quelle que soit la dureté du bitume.

Dans les Tableaux 1 et 2, les résultats des tests suivants apparaissent:
- le % refus à 160 µm (selon NFT 66-016): il permet de quantifier le taux de grosses particules de liant dans l'émulsion à examiner. Le test consiste à faire passer une quantité d'émulsion connue à travers un tamis de 160 µm et après lavage et séchage, à déterminer la quantité de liant retenue sur le tamis. Les résultats sont exprimés en % massique par rapport à l'émulsion initiale.
- pH: il est mesuré à l'aide d'un pHmètre dont le réglage a été vérifié à partir de solutions étalon encadrant la gamme de pH concernée.
- la détermination du diamètre moyen D50 (en µm) et de la surface spécifique (en m ¨/kg) résulte d'une mesure de granulomètre laser (granulomètre CILAS 615); le principe de la mesure étant la détection de l'intensité de lumière diffractée par les particules d'émulsion à différents angles.
- l'observation des émulsions après leur fabrication permet de détecter la présence d'un crémage qui conduit à la formation d'une peau plus ou moins épaisse qui flotte sur l'émulsion de surface.
- le test de stabilité à la température consiste à mélanger une même quantité connue d'émulsion à une quantité fixée de fibres de bois. Le mélange est pressé sous forme de "galette" à différentes températures comprises entre 30°C et 70°C.

Après séchage, on examine les galettes et on les qualifie par les notes 0, 1, 2.
0 : aucune tache noire (bonne stabilité)
1 : quelques taches noires (stabilité moyenne)
2 : nombreuses taches noires (stabilité mauvaise)

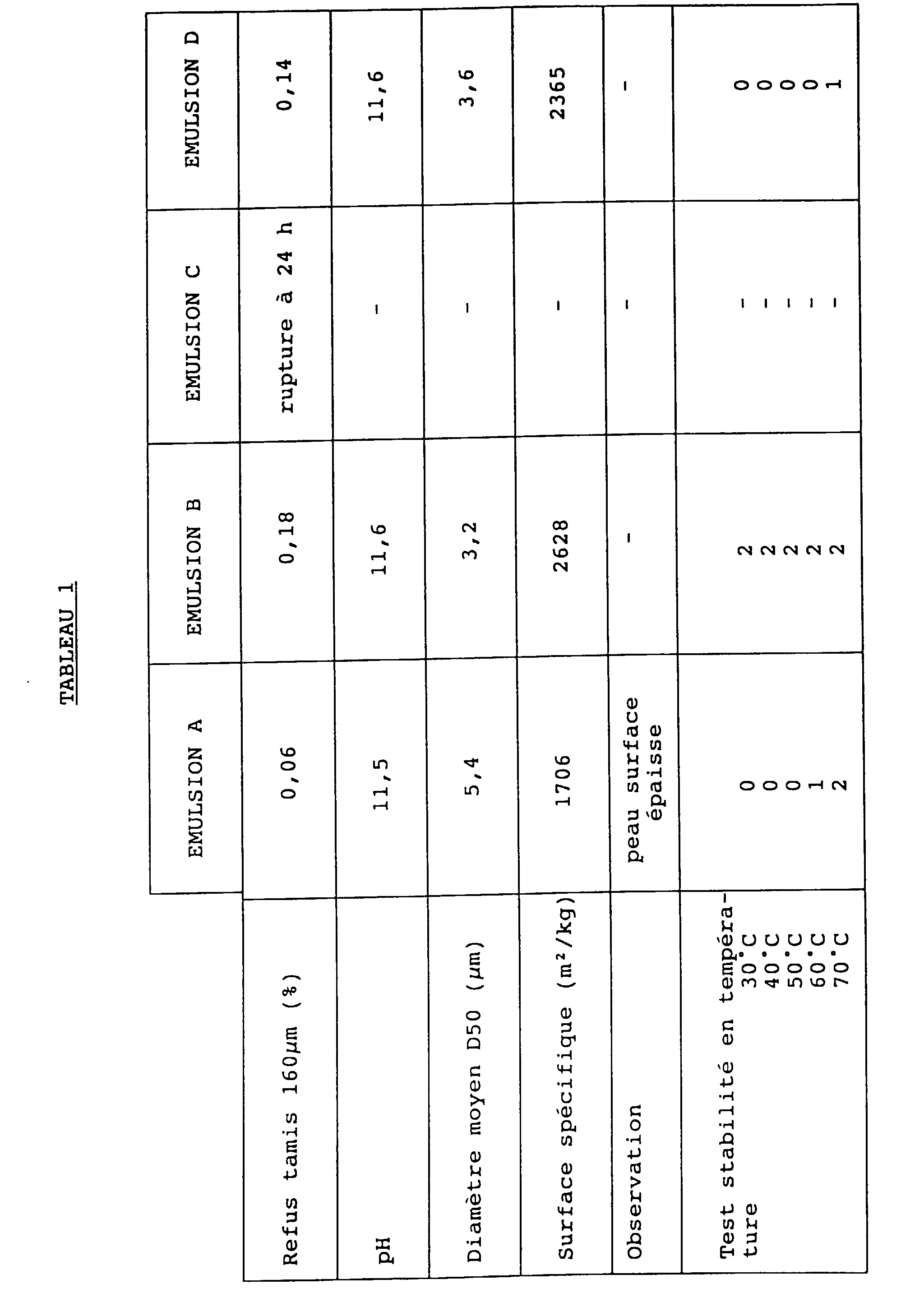

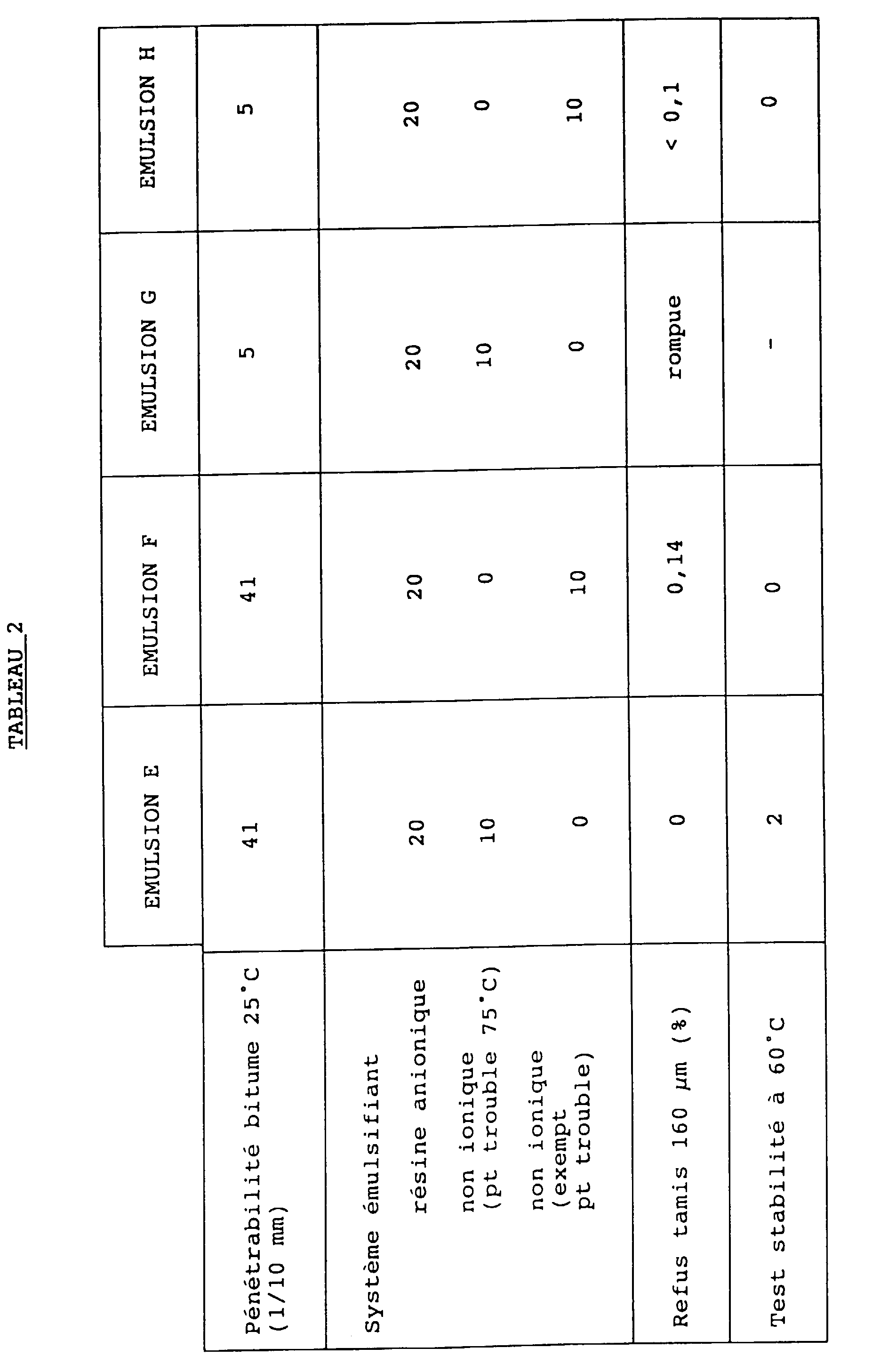

## Revendications

1. Emulsion à pH basique d'un liant bitumineux, dur dans un état final, comprenant dans sa phase aqueuse, d'une part, un émulsifiant anionique et un émulsifiant non ionique dans sa phase anhydre, d'autre part, l'émulsifiant non ionique a un point de trouble supérieur à 100°C, permettant aux particules de l'émulsion de se disperser parfaitement au mélange avec la matière à lier avant de produire l'effet de liant entre les particules de cette matière.

2. Emulsion à pH basique d'un liant bitumineux, dur dans un état final, selon la revendication 1, caractérisée en ce que l'émulsifiant non ionique est exempt de point de trouble, permettant aux particules de l'émulsion de se disperser parfaitement au mélange avec la matière à lier avant de produire l'effet de liant entre les particules de cette matière.

3. Emulsion anionique selon la revendication 1 ou 2, caractérisée en ce que l'émulsifiant anionique est une résine acide de type phénolique.

4. Emulsion anionique selon la revendication 1 ou 2, caractérisée en ce que l'émulsifiant anionique est une résine acide issue de la gomme de pin.

5. Emulsion anionique selon la revendication 1 ou 2, caractérisée en ce que l'émulsifiant anionique est un acide résinique de Tall-oil.

6. Emulsion anionique selon l'une quelconque des revendications 1 à 5, caractérisée en ce que l'émulsifiant non ionique est un émulsifiant exempt de chaîne éthoxylée.

7. Emulsion anionique selon l'une quelconque des revendications 1 à 5, caractérisée en ce que l'émulsifiant non ionique est un sucrolipide.

8. Système émulsifiant pour l'obtention d'une émulsion anionique d'un liant bitumineux, dur dans un état final, caractérisé en ce qu'il comprend un émulsifiant anionique et un émulsifiant non ionique.

9. Procédé de fabrication d'une émulsion anionique d'un liant bitumineux, dur en un état final, comprenant les étapes de:
- préparation d'une phase aqueuse d'un émulsifiant anionique par dispersion dans de l'eau industrielle;
- addition à la phase aqueuse d'une base permettant d'obtenir une émulsion basique d'une valeur pH > 10;
- addition d'un émulsifiant non ionique;
- addition d'un bitume, et
- mélange de l'ensemble émulsifiant/bitume dans un homogénéiseur.
